# EUROPÄISCHE PATENTANMELDUNG

(11) **EP 1 506 901 A2**
(43) Veröffentlichungstag der Anmeldung: **16.02.2005**
(21) Anmeldenummer: 04018753.6
(22) Anmeldetag: 06.08.2004
(51) Int. Cl.: B62B 5/00, B60B 33/02

(54) **Rollbehälter**

(30) Priorität: 14.08.2003 DE 20312616 U
(71) Anmelder: GEBHARDT Transport- und Lagersysteme GmbH, 93413 Cham (DE)
(72) Erfinder: Gissibl, Hermann, 92709 Moosbach (DE)
(74) Vertreter: Schieschke, Klaus, Dipl.-Ing.

(57) **Zusammenfassung**

Die Erfindung betrifft einen Rollbehälter mit einer Bodenplatte 1, an dessen Unterseite mindestens eine feststehende Rolle und zwei im Abstand davon angeordnete, jeweils um eine Hochachse A-A schwenkbare Lenkrollen 2 befestigt sind. Die beiden Lenkrollen 2 sind bezüglich ihrer Drehmöglichkeit um die jeweilige Hochachse A-A mechanisch verriegelbar.

## Beschreibung

Die Erfindung bezieht sich auf einen Rollbehälter mit einer Bodenplatte, an dessen Unterseite mindestens eine feststehende Rolle und zwei im Abstand davon angeordnete, jeweils um eine Hochachse schwenkbare Lenkrollen befestigt sind.

Derartige Rollenbehälter finden beispielsweise in Supermärkten, in Lagerhallen und in anderen Bereichen Anwendung, in welchen Transportgüter in größeren Mengen auf einfache Weise umgeschlagen werden sollen. Hierbei weisen die Rollbehälter im Allgemeinen an der Unterseite ihrer Bodenplatte zwei feststehende Rollen und zwei im Abstand davon angeordnete, um ihre jeweilige Hochachse schwenkbare Lenkrollen Anwendung. Durch die Lenkrollen wird eine bessere Manövrierfähigkeit der jeweiligen Rollbehälter hergestellt.

Es können nun Fälle auftreten, in welchen diese Manövrierfähigkeit nicht erwünscht ist.

Die Aufgabe der vorliegenden Erfindung besteht nun darin, eine einfach aufgebaute Konstruktion für einen Rollbehälter zu schaffen, welcher die Manövrierfähigkeit der beiden Lenkrollen im jeweiligen Bedarfsfall ausschaltet.

Diese Aufgabe wird erfindungsgemäß dadurch gelöst, dass die beiden Lenkrollen bezüglich ihrer Drehmöglichkeit um die jeweilige Hochachse mechanisch verriegelbar sind. Hierbei kann beispielsweise eine gleichzeitige mechanische Verriegelung der beiden Lenkrollen vorgesehen sein. Damit übernehmen diese ursprünglichen Lenkrollen die Funktion von feststehenden Rollen, sogenannten Bockrollen, so dass sich auf einfach Weise eine Erweiterung des Anwendungsbereichs des erfindungsgemäßen Rollbehälters ergibt.

Bei einem Rollbehälter, bei welchem jede Lenkrolle in einer Lagergabel lagert und diese Lagergabel über eine Lagerplatte an der Unterseite der Bodenplatte befestigt ist, besteht die Möglichkeit der mechanischen Verriegelung der jeweiligen Lagergabel und damit auch der jeweiligen Lenkrolle.

Erfindungsgemäß ist an der Bodenplatte eine Kupplungswelle drehbar gelagert, welche zumindest an einem Endbereich ein als Schwenkhebel ausgebildetes, die Lagergabel in ihrer Drehmöglichkeit um die Hochachse arretierendes Verriegelungselement aufweist. Dieses Verriegelungselement kann beispielsweise ein die Lagergabel in ihrer Drehmöglichkeit um die Hochachse arretierender Stift oder ein Riegel sein.

In weiterer Ausgestaltung der Erfindung kann die Kupplungswelle an beiden Endbereichen jeweils einen Schwenkhebel und ein Verriegelungselement für die jeweilige Lagergabel aufweisen.

Nach einem anderen Merkmal der Erfindung kann die Kupplungswelle geteilt ausgebildet sein, wobei die einzelnen Teile durch mindestens eine Hülse miteinander verbunden sind.

Die Erfindung wird nachfolgend anhand eines in der Zeichnung dargestellten Ausführungsbeispiels näher beschrieben. In der Zeichnung zeigen:
- Fig. 1: eine schematische Vorderansicht eines Rollbehälters mit zwei Lenkrollen
- Fig. 2: eine Lenkrolle in entriegelter Stellung
- Fig. 3: eine Lenkrolle in verriegelter Stellung, jeweils in Seitenansicht
- Fig. 4: eine Draufsicht auf den Rollbehälter gemäß Fig. 1, teils gebrochen.

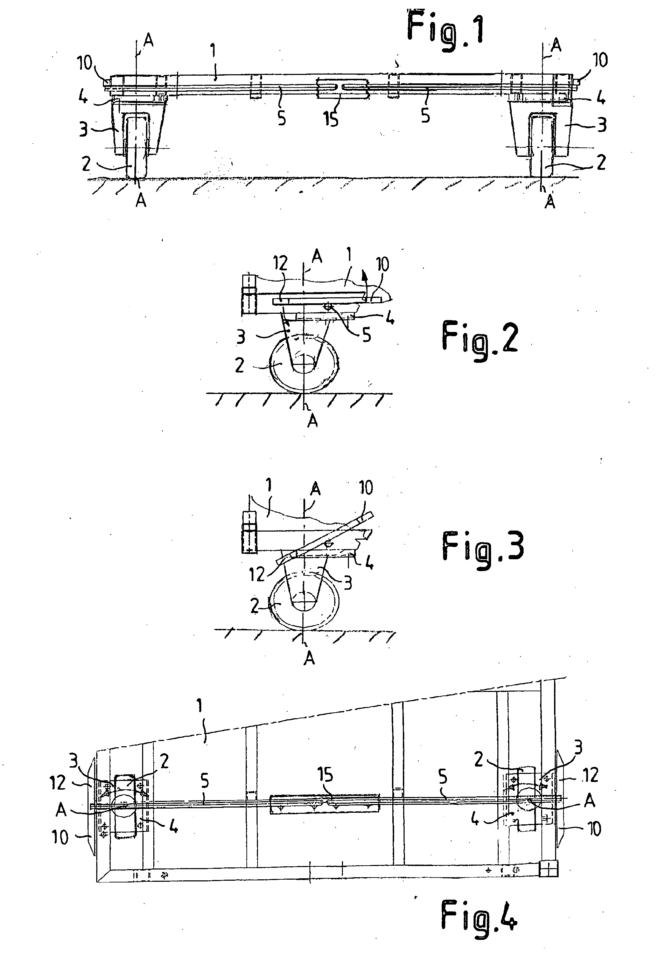

In Figur 1 und 4 ist ein Rollbehälter dargestellt, welcher eine Bodenplatte 1 aufweist. An der Unterseite der Bodenplatte 1 sind zwei nicht näher dargestellte feststehende Rollen - sogenannte Bockrollen - angeordnet, sowie zwei im Abstand davon vorgesehene, jeweils um eine Hochachse A-A schwenkbare Lenkrollen 2.

Die beiden insbesondere in Fig. 1 dargestellten Lenkrollen 2 sind bezüglich ihrer Drehmöglichkeit um die vorgenannte Hochachse A-A mechanisch verriegelbar. Hierbei ist nach dem Ausführungsbeispiel in den Zeichnungen eine gleichzeitige mechanische Verriegelung der beiden Lenkrollen 2 vorgesehen.

Bei dem dargestellten Ausführungsbeispiel ist jede Lenkrolle 2 in einer Lagergabel 3 gelagert, wobei diese Lagergabel 3 über eine Lagerplatte 4 an der Unterseite der Bodenplatte 1 befestigt ist. Zur Arretierung der Lenkrollen 2 ist eine mechanische Verriegelung der jeweiligen Lagergabel 3 vorgesehen.

Gemäß Fig. 1 und 3 ist hierzu an der Bodenplatte 1 eine Kupplungswelle 5 drehbar gelagert, welche bei dem Ausführungsbeispiel nach Fig. 1 und 4 an beiden Endbereichen ein als Schwenkhebel 10 ausgebildetes, die Lagergabel 3 in ihrer Drehmöglichkeit um die vorgenannte Hochachse A-A arretierendes Verriegelungselement 12 aufweist. Dieses Verriegelungselement 12 ist als Riegel ausgebildet.

Nach Fig. 2 ist die Lenkrolle 2 freigegeben, d. h. sie kann um ihre Hochachse A-A gedreht werden, wobei sich die Lagergabel 3 gegenüber der Lagerplatte 4 dreht. Der Schwenkhebel 10 befindet sich in waagerechter Position.

Wird nun gemäß Fig. 3 der Schwenkhebel um die Kupplungswelle 5 per Hand oder über Fußbedienung entgegen dem Uhrzeigersinn um einen bestimmten Winkel gedreht, so beaufschlagt der Riegel 12, d. h. das Verriegelungselement die Lagergabel 3 und verhindert damit deren Drehmöglichkeit um die Hochachse A-A.

Nach Fig. 4 erstreckt sich die Kupplungswelle 5 bis zu beiden Endbereichen, wobei jeweils ein Schwenkhebel 10 und ein Verriegelungselement 12, d. h. ein Riegel für die jeweilige Lagergabel 3 vorgesehen ist.

Durch die Drehung des Schwenkhebels 10 aus der Position nach Fig. 2 in die Position nach Fig. 3 wird nun bewirkt, dass das Verriegelungselement 12 die jeweilige Lagergabel 3 beaufschlagt, so dass diese sich nicht mehr um die Hochachse A-A drehen kann. Die beiden Lenkrollen 2 haben damit die gleiche Funktion wie die ebenfalls an der Unterseite der Bodenplatte befestigten feststehenden Rollen, d. h. die betreffenden Bockrollen.

Aus Fig. 4 geht hervor, dass die Kupplungswelle 5 geteilt ausgebildet sein kann, wobei die einzelnen Teile durch eine Hülse 15 miteinander verbunden sind. Hierbei kann die Kupplungswelle 5 beispielsweise als Sechskant- oder als Vierkantwelle ausgebildet sein, wobei durch die Hülse 15 eine Verbindung der beiden Teile der Kupplungswelle 5 hergestellt wird.

Erfindungsgemäß besteht auch die nicht näher dargestellte Möglichkeit, das die Lagergabel 3 in ihrer Drehmöglichkeit um die Hochachse A-A jeweils durch einen Stift mechanisch verriegelt wird.

Durch die vorstehend einfach gestaltete Konstruktion ergibt sich eine erhebliche Verbesserung des Anwendungsbereichs des erfindungsgemäßen Rollbehälters, wobei diese Rollbehälter nunmehr statt zwei Lenkrollen und zwei feststehenden Rollen insgesamt vier feststehende Rollen besitzen können.

## Patentansprüche

1. Rollbehälter mit einer Bodenplatte (1), an dessen Unterseite mindestens eine feststehende Rolle und zwei im Abstand davon angeordnete, jeweils um eine Hochachse (A-A) schwenkbare Lenkrollen (2) befestigt sind
**dadurch gekennzeichnet,**
**dass** die beiden Lenkrollen (2) bezüglich ihrer Drehmöglichkeit um die jeweilige Hochachse (A-A) mechanisch verriegelbar sind.

2. Rollbehälter nach Anspruch 1, **gekennzeichnet durch** eine gleichzeitige mechanische Verriegelung der beiden Lenkrollen (2).

3. Rollbehälter nach Anspruch 1 und 2, wobei jede Lenkrolle (2) in einer Lagergabel (3) gelagert und diese Lagergabel (3) über eine Lagerplatte (4) an der Unterseite der Oberplatte (1) befestigt ist, **gekennzeichnet durch** mechanische Verriegelung der jeweiligen Lagergabeln (3).

4. Rollbehälter nach Anspruch 3, **dadurch gekennzeichnet, dass** an der Bodenplatte (1) eine Kupplungswelle (5) drehbar gelagert ist, welche zumindest an einem Endbereich ein als Schwenkhebel (10) ausgebildetes die Lagergabel (3) in ihrer Drehmöglichkeit um die Hochachse (A-A) arretierendes Verriegelungselement (12) aufweist.

5. Rollbehälter nach Anspruch 4, **dadurch gekennzeichnet, dass** die Kupplungswelle (5) an beiden Endbereichen jeweils einen Schwenkhebel (10) und ein Verriegelungselement (12) für die jeweilige Lagergabel (3) der Lenkrollen (2) aufweist.

6. Rollbehälter nach Anspruch 4 oder 5, **dadurch gekennzeichnet, dass** die Kupplungswelle (5) geteilt ausgebildet ist, wobei die einzelnen Teile durch mindestens eine Hülse (15) miteinander verbunden sind.

7. Rollbehälter nach einem oder mehreren der vorhergehenden Ansprüche, **dadurch gekennzeichnet, dass** die mechanische Verriegelung durch einen die Lagergabel (3) in ihrer Drehmöglichkeit um die Hochachse (A-A) arretierenden Stift oder durch einen Riegel (12) durchführbar ist.
